# FASCICULE DE BREVET EUROPEEN

(11) **EP 2 030 712 B1**
(45) Date de publication et mention de la délivrance du brevet: **02.03.2011**
(21) Numéro de dépôt: 08161193.1
(22) Date de dépôt: 25.07.2008
(51) Int. Cl.: B23C 5/10

(54) **Fraise à rainurer pour usinage à grande avance et à faible profondeur de passe**
Nutenfräser zur Schnellvorschubbearbeitung mit geringer Eindringtiefe
Groove cutter for machining with course feed and reduced depth of cut

(30) Priorité: 30.08.2007 FR 0706073
(43) Date de publication de la demande: 04.03.2009
(73) Titulaire: Snecma, 75015 Paris (FR)
(72) Inventeur: Rouge, Gilles, 91670 Angerville (FR); Thoison, Pascal, 91540 Mennecy (FR); Turrini, Claude, 91610 Ballancourt (FR)
(74) Mandataire: Ramey, Daniel

(56) Documents cités:
- EP-A- 0 477 093
- EP-A- 1 348 508
- EP-A- 1 498 203
- WO-A-2007/013447

## Description

La présente invention concerne une fraise, en particulier à rainurer, pour usinage à grande avance et à faible profondeur de passe, cette fraise étant particulièrement adaptée mais non exclusivement pour usiner des pièces en matériaux très durs utilisées dans l'industrie aéronautique.

Une turbomachine d'avion comprend par exemple de nombreuses pièces réalisées dans des matériaux de grande dureté tels que des matériaux composites et des superalliages à base de nickel et de cobalt. L'usinage à grande vitesse de ces matériaux génère des contraintes thermiques et mécaniques importantes dans les outils de coupe qui doivent donc être réalisés dans des matériaux très rigides et résistants aux températures élevées.

II est connu de fabriquer une fraise à rainurer dans un bloc de matière en céramique ou en carbure. Une fraise en céramique présente une grande dureté, une grande résistance thermique, et permet d'usiner à grande vitesse et d'obtenir des taux d'enlèvement de matière importants. Cependant, elle est coûteuse à réaliser et très fragile si bien qu'elle est en général réservée à l'usinage de matériaux tendres tels que du bois et n'est donc pas utilisée dans l'industrie aéronautique. Une fraise en carbure est moins chère à fabriquer et résiste mieux aux contraintes mécaniques lors de l'usinage. Cependant, elle est moins performante et s'use plus rapidement qu'une fraise en céramique.

On a déjà proposé de former une fraise comprenant une première partie cylindrique réalisée en carbure et formant le corps de la fraise, à une extrémité de laquelle est fixée par brasage une seconde partie cylindrique en céramique formant la tête de la fraise et comportant des arêtes de coupe. La brasure s'étend en général dans un plan sensiblement perpendiculaire à l'axe de rotation de la fraise. Ce type de fraise en deux parties est très avantageux car il permet de limiter l'utilisation de la céramique à la seule tête de fraisage et de choisir un matériau de résilience supérieure à celle de la céramique et plus économique pour réaliser le corps de l'outil. Une telle fraise est en outre particulièrement adaptée à l'usinage à grande vitesse de pièces en superalliages ou en matériaux composites. Le brevet EP-B-0 477 093 de la demanderesse décrit une fraise avec les caractéristiques contenues dans le préambule de la revendication 1.

Une fraise en deux parties du type précité présente néanmoins un inconvénient majeur. Lors d'une opération d'usinage, les efforts de torsion appliqués sur l'outil de coupe engendrent des forces de cisaillement importantes dans la brasure qui peuvent la fragiliser et provoquer le détachement de la tête de fraisage et l'endommagement de la pièce à usiner.

L'invention propose une solution simple, efficace et économique à ce problème.

Elle a pour objet une fraise à rainurer du type précité dont le dimensionnement et la géométrie sont particulièrement adaptés pour réduire les forces de cisaillement auxquelles est soumise la brasure de liaison du corps et de la tête de la fraise lors d'une opération d'usinage.

L'invention propose à cet effet une fraise avec les caractéristiques de la revendication 1.

Grâce à la combinaison des caractéristiques géométriques et dimensionnelles de la fraise selon l'invention, les efforts de coupe qui transitent entre les dents et la pièce en cours d'usinage se traduisent par de faibles efforts de torsion dans la fraise et par des efforts de compression axiale plus importants auxquels la fraise est beaucoup moins sensible. La réduction des efforts de torsion dans la fraise permet de diminuer les forces de cisaillement dans la brasure de la fraise et donc de limiter le risque d'arrachement de la tête du corps de la fraise.

La fraise selon l'invention permet d'usiner à grande vitesse des pièces en matériaux très durs, telles que par exemple un rouet en Inconel 718 d'un compresseur centrifuge de turbomachine. Cette fraise permet d'atteindre des vitesses de coupe et des avances importantes, et d'augmenter le taux d'enlèvement de matière de façon à diminuer le temps d'usinage d'une pièce.

Dans la présente demande, on entend par plan de référence Pᵣ, un plan passant par l'axe de rotation de la fraise et par un point considéré de l'arête principale de coupe d'une dent. Un plan de travail P_{f} est un plan perpendiculaire à l'axe de rotation de la fraise et passant par le point considéré de l'arête principale de coupe de la dent. Un plan vers l'arrière Pp est un plan perpendiculaire à un plan de référence et à un plan de travail, au point considéré de l'arête principale de coupe. Un plan d'arête Pₛ est un plan tangent à l'arête principale de coupe, à un point considéré de cette arête, et perpendiculaire au plan de référence correspondant. Un plan normal Pₙ est un plan perpendiculaire à l'arête principale de coupe, au point considéré de cette arête. La face de coupe d'une dent est la surface le long de laquelle glisse les copeaux de matière, et la face de dépouille de cette dent est la surface le long de laquelle défilent les surfaces engendrées sur la pièce.

Selon une première caractéristique de l'invention, la conicité de la fraise est déterminée pour limiter les frottements entre la surface externe de la fraise et les parois latérales de la pièce en cours d'usinage, ces frottements pouvant entraîner des contraintes thermiques dans la fraise et la pièce usinée qui provoquent une dégradation accélérée de la fraise et une déformation de la pièce. Cette conicité est également déterminée pour assurer une bonne évacuation des copeaux de matière. La fraise a par exemple une conicité de 3°environ.

Selon une seconde caractéristique de l'invention, le profil de la face de dépouille, formé par l'intersection de la face de dépouille avec un plan passant par l'axe de la fraise, a une forme arrondie convexe vers l'extérieur dont le rayon de courbure est par exemple de 12mm environ. La forme de ce profil permet de limiter les efforts de torsion dans la fraise et de favoriser à a place les efforts de compression axiale dans la fraise.

Selon une troisième caractéristique de l'invention, l'angle de coupe radial ou latéral γ_{f}, mesuré dans le plan de travail perpendiculaire à l'axe de rotation de la fraise et passant par le point considéré de l'arête principale, est négatif pour augmenter la robustesse de l'arête de coupe et assurer également une bonne évacuation des copeaux. Cet angle négatif permet aussi d'avoir une contrainte de compression et non de traction sur l'arête de coupe lorsque cette arête approche de la fin du trait de coupe et que le copeau est prêt à se détacher de la pièce. L'angle de coupe radial γ_{f} est par exemple de -5°environ.

De préférence, la fraise comprend une arête de coupe secondaire sensiblement axiale raccordée à l'arête principale de coupe par un bec arrondi à faible rayon de courbure, par exemple compris entre 0,5 et 1 mm. Les arêtes principale et secondaire de coupe d'une dent définissent entre elles la face de coupe de la dent. L'angle de coupe axial ou vers l'arrière γₚ entre la face de coupe de chaque dent et le plan de référence, est positif et compris entre 1 et 5° environ, cet angle étant mesuré dans le plan vers l'arrière.

La fraise selon l'invention a donc une géométrie positive/négative caractérisée par un angle de coupe axial γₚ positif et par un angle de coupe radial γ_{f} négatif. Ce type de fraise peut supporter des efforts de coupe très importants et supérieurs à ceux d'une fraise à géométrie double positive. Cette géométrie positive/négative permet également des vitesses d'usinage élevées sous de fortes avances car l'angle de coupe radial négatif renforce la résistance de l'arête de coupe et l'angle de coupe axial positif facilite la formation des copeaux en les dirigeant du côté opposé à la tête de la fraise.

En fonction de l'application envisagée, la fraise selon l'invention peut comprendre de deux à huit dents. La fraise a par exemple un diamètre externe D compris entre 10 et 30mm environ, et la tête de la fraise peut avoir une dimension axiale comprise entre 5 et 10mm environ.

L'arête principale de coupe peut être raccordée à la face de coupe par un chanfrein de protection de l'arête, ce chanfrein ayant une dimension axiale comprise entre 0,01 et 0,3mm environ et formant avec la face coupe un angle compris entre 10 et 30° environ.

Selon encore d'autres caractéristiques de la fraise selon l'invention :
- la face de dépouille s'étend en direction circonférentielle sur une distance comprise entre 0,1 et 2mm environ ;
- l'angle de dépouille entre la face de dépouille et un plan d'arête tangent à un point considéré de l'arête principale de coupe et perpendiculaire au plan de référence est positif et compris entre 5 et 10° environ, cet angle étant mesuré dans un plan normal au point considéré de l'arête. Cet angle de dépouille α est par exemple de 7° environ ;
- une face de contre-dépouille s'étend en arrière de la face de dépouille, le profil de la face de contre-dépouille, formé par l'intersection de cette face avec un plan passant par l'axe de la fraise, a une forme arrondie convexe vers l'extérieur dont le rayon de courbure est compris entre 5 et 20mm environ. De préférence, l'angle de contre-dépouille entre la face de contre-dépouille et le plan d'arête précité est positif et compris entre 10 et 20° environ ;
- les faces de dépouille et de contre-dépouille sont raccordées à une paroi latérale de la dent par des bords arrondis ayant des rayons de courbure compris entre 0,5 et 1mm environ. Ces bords arrondis augmentent la résistance de la fraise et assurent une répartition plus régulière de la chaleur et de l'usure ;
- les dents s'étendent autour d'une cavité annulaire centrale de la tête, cette cavité ayant une forme générale tronconique alignée avec l'axe de la fraise et dont la base est située du côté de l'extrémité inférieure de la fraise, le sommet de la cavité étant en portion de sphère dont le rayon est compris entre 2 et 8mm environ. L'angle d'ouverture de cette cavité peut être compris entre 90 et 150° environ, et est par exemple de 120°. La cavité est de préférence raccordée aux faces de dépouille et de contre-dépouille de chaque dent par un bord arrondi ayant un rayon de courbure compris entre 0,5 et 1 mm environ. Cette cavité a par exemple un diamètre compris entre 5 et 15mm environ, et une hauteur axiale comprise entre 1 et 3mm environ. La fraise comportant une telle cavité est particulièrement adaptée au rainurage oblique (ou ramping). Dans ce cas, la fraise est légèrement inclinée dans le sens de l'avance par rapport à une normale à la pièce à usiner pour éviter que la fraise ne repose à plat contre la pièce à usiner. Cette inclinaison δ qui est comprise entre 1 et 5° environ, et de préférence entre 2 et 3° environ, a notamment pour objet d'empêcher la fraise de talonner, ce qui nuirait à l'état de surface de la pièce usinée en y laissant des marques plus ou moins profondes.

L'invention propose également un procédé de fraisage d'une pièce en composite ou en superalliage, au moyen d'une fraise à rainurer du type décrit ci-dessus, caractérisé en ce que les vitesses de coupe v_{c} sont comprises entre 200 et 1500m/min, et de préférence entre 600 et 1000m/min, les avances par dent f_{z} sont comprises entre 0,1 et 1 mm/dent, et de préférence entre 0,2 et 0,5mm, et les profondeurs de passe aₚ sont comprises entre 0,01 et 2mm, et de préférence entre 0,1 et 1mm. Ces plages déterminent les conditions optimales dans lesquelles il est conseillé d'utiliser la fraise selon l'invention sans risque d'usure accélérée ou de casse de la fraise.

La vitesse de coupe (v_{c} en m/min) indique la vitesse à laquelle l'arête de coupe travaille la surface de la pièce. Cette vitesse permet de déterminer la vitesse de broche de la fraise à partir du diamètre D de cette fraise.

L'avance par dent (f_{z} en mm/dent) représente la distance linéaire parcourue par la fraise entre la pénétration de deux dents successives dans la pièce. L'avance par tour (f en mm/tour) de la fraise est donnée par le produit de l'avance par dent et du nombre z de dents de la fraise. L'avance par tour d'une fraise indique de combien l'outil avance au cours d'une rotation et est une valeur spécialement utilisée pour évaluer l'avance d'une fraise.

La profondeur de coupe axiale (aₚ en mm) en fraisage de surfaçage correspond à l'épaisseur de matière enlevée par l'outil et à la distance à laquelle l'outil est réglé au-dessous de la surface initiale de la pièce.

L'invention sera mieux comprise et d'autres caractéristiques, détails et avantages de l'invention apparaîtront à la lecture de la description suivante faite à titre d'exemple non limitatif et en référence aux dessins annexés dans lesquels :
- la figure 1 est une vue schématique de dessous d'une fraise à rainurer selon l'invention,
- la figure 2 est une vue agrandie du détail I₂ de la figure 1,
- la figure 3 est une vue en coupe selon la ligne III-III de la figure 1,
- la figure 4 est une vue agrandie du détail I₄ de la figure 3,
- la figure 5 est une vue en coupe selon la ligne V-V de la figure 1.

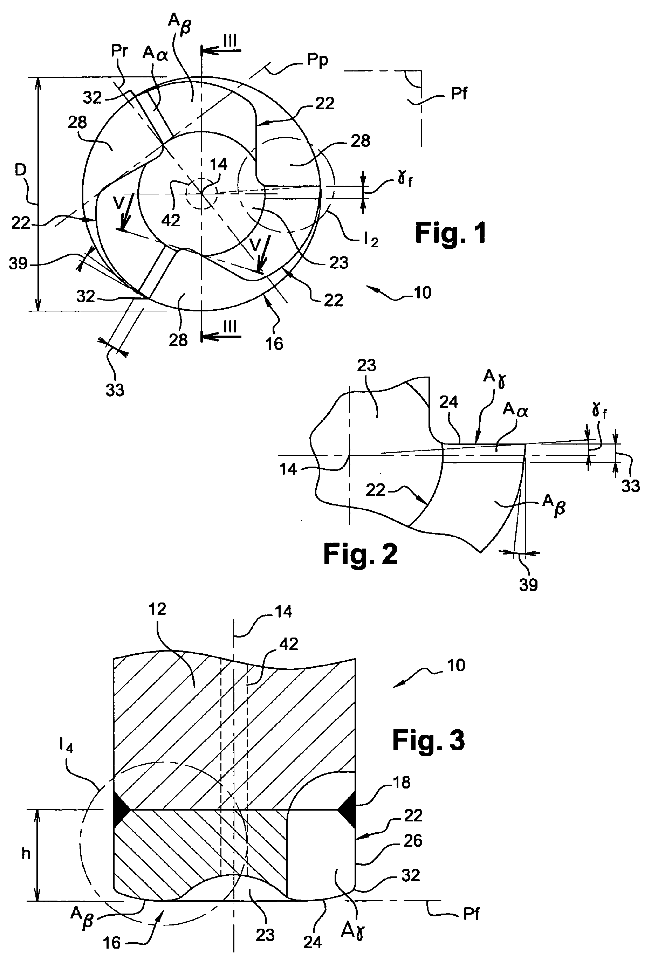

Les figures 1 à 5 représentent une fraise à rainurer 10 selon l'invention pour usinage à grande avance et à faible profondeur de passe de pièces en matériaux de grande dureté, tels que des matériaux aéronautiques en composite ou en superalliage (par exemple de l'Inconel 718).

Cette fraise 10 comporte un corps 12 en carbure de forme allongée s'étendant le long de l'axe 14 de rotation de la fraise et à une extrémité libre duquel est fixée par brasage une tête taillée 16 en céramique formant la partie active de la fraise. A titre d'exemple, le corps 12 de la fraise est réalisé en carbure de tungstène et sa tête 16 est réalisée en céramique à base d'alumine. Le joint de brasure 18 s'étend dans un plan perpendiculaire à l'axe de rotation 14 de la fraise (figure 3). Le corps 12 de la fraise est destiné à être fixé par des moyens appropriés sur le mandrin d'une machine-outil.

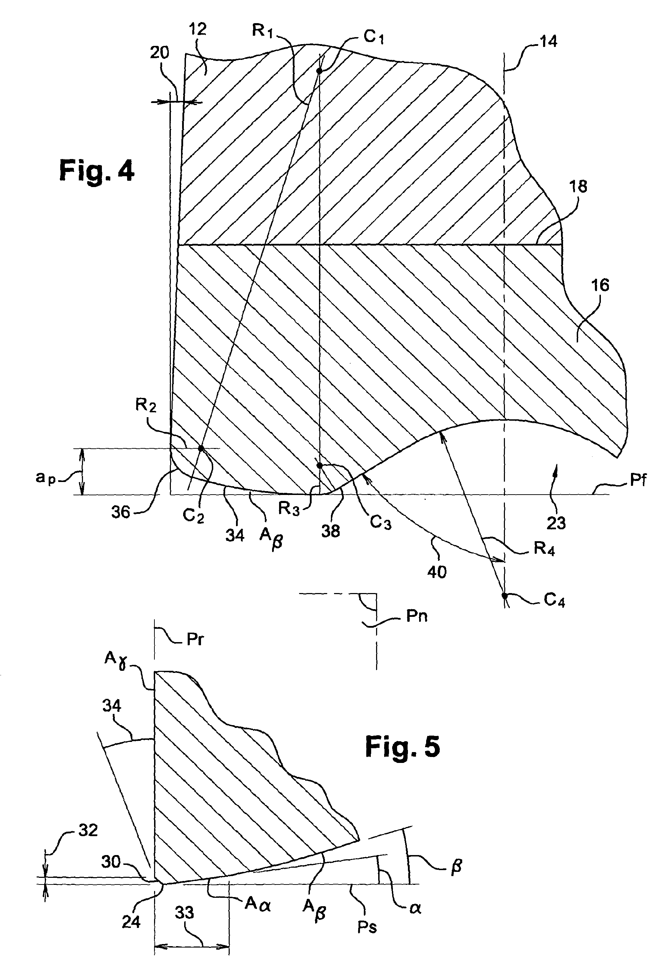

La fraise 10 a une forme générale en tronc de cône. La grande base du tronc de cône est située au niveau de la tête 16 de la fraise et la conicité 20 de la fraise est comprise entre 1 et 5 degrés environ, de préférence entre 2 et 4° environ, et est par exemple de 3° (figure 4).

La tête 16 de la fraise a un diamètre externe D compris entre 10 et 30mm environ et a une hauteur ou dimension axiale h comprise entre 5 et 10mm environ. Dans l'exemple représenté, la tête a un diamètre D de 18mm et une hauteur de 7mm.

La tête 16 comprend trois dents de coupe 22 à orientation circonférentielle, régulièrement réparties autour de l'axe 14 de la fraise. Ces dents 22 s'étendent autour d'une cavité centrale 23 de la fraise qui sera décrite plus en détail dans ce qui suit en référence à la figure 4.

Chaque dent 22 comporte une arête principale de coupe 24 sensiblement radiale et une arête secondaire de coupe 26 sensiblement axiale qui délimitent entre elles une face avant de coupe Aγ. Dans l'exemple représenté, la face de coupe Aγ de chaque dent s'étend sur toute la hauteur de la tête 16 et sur une partie d'extrémité inférieure du corps 12 de la fraise, en traversant le plan du joint de brasure 18 (figure 3).

La face de coupe Aγ forme une surface de glissement des copeaux de matière et définit avec l'extrémité arrière d'une dent adjacente une poche à copeaux 28 où sont provisoirement stockés les copeaux avant d'être éjectés vers l'extérieur lors d'une opération d'usinage.

La face de coupe Aγ définit un angle d'attaque compris entre 80 et 100° environ, et par exemple de 87°, par rapport à la surface d'une pièce à usiner.

La face de coupe Aγ est raccordée à l'arête principale de coupe 24 par un chanfrein 30 (figure 5), qui a une hauteur 32 ou dimension axiale comprise entre 0,01 et 0,3mm environ, et par exemple de 0,1 mm. L'angle 34 entre le chanfrein et la face de coupe Aγ est compris entre 10 et 30° environ, et est par exemple de 20°.

Les arêtes principale et secondaire de coupe 24, 26 sont raccordées entre elles par un bec 32 de forme arrondie dont le rayon de courbure est compris entre 0,5 et 1 mm environ, et est par exemple de 0,8mm (figure 3).

Dans les dessins, on définit les plans suivants :
- Pᵣ : plan de référence de la fraise, passant par un point considéré (par exemple l'extrémité radialement interne) de l'arête principale de coupe d'une dent 22 et par l'axe de rotation 14 de la fraise,
- P_{f} : plan de travail de la fraise, perpendiculaire au plan de référence Pᵣ et passant par le point considéré de l'arête principale de coupe de la dent 22 (ce plan est confondu avec le plan du dessin de la figure 1),
- Pₚ : plan vers l'arrière de la fraise, perpendiculaire aux plans de référence Pᵣ et de travail P_{f}, et passant par le point considéré de la dent,
- Pₙ : plan normal à l'arête, perpendiculaire à l'arête principale de coupe 24, à un point considéré de cette arête (son extrémité radialement interne par exemple - le plan Pₙ représenté en figure 5 correspond au plan de coupe V-V de la figure 1),
- Pₛ : plan d'arête de la fraise, tangent au point considéré de l'arête principale de coupe (son extrémité radialement interne), et perpendiculaire au plan de référence Pᵣ.

L'angle de coupe radial γ_{f} entre la face de coupe A_{γ} de chaque dent 22 et le plan de référence Pᵣ est négatif et compris entre 2 et 8° environ, de préférence entre 4 et 6°, et est par exemple de 5°. Cet angle γ_{f} est mesuré dans le plan de travail P_{f} (figure 2)

L'angle de coupe axial γₚ entre la face de coupe A_{γ} de chaque dent 22 et le plan de référence Pᵣ, est positif et compris entre 1 et 5° environ, de préférence entre 2 et 4°, et est par exemple de 3°. Cet angle γₚ est mesuré dans le plan vers l'arrière Pₚ.

La face de coupe A_{γ} est raccordée par le chanfrein 30 et l'arête principale de coupe 24 à une face inférieure de dépouille A_{α} qui se prolonge vers l'arrière par une face inférieure de contre-dépouille A_{β}.

La face de dépouille A_{α} s'étend en direction circonférentielle sur une dimension 33 comprise entre 0,1 et 2mm environ, et de préférence entre 0,5 et 1 mm environ (figure 2).

L'angle de dépouille α entre la face de dépouille A_{α} et le plan d'arête Pₛ est positif et compris entre 5 et 10° environ, et est par exemple de 7°. Cet angle est mesuré dans le plan normal Pₙ (figure 5).

La face de contre-dépouille A_{β} s'étend depuis la face de dépouille A_{α} jusqu'à l'extrémité arrière de la dent 22, et l'angle de contre-dépouille β entre la face de contre-dépouille A_{β} et le plan d'arête Pₛ est positif et compris entre 10 et 20° environ, et est par exemple de 15°. Cet angle de contre-dépouille β est également mesuré dans le plan normal Pₙ précité.

Les profils de la face de dépouille A_{α} et de la face de contre-dépouille A_{β}, formés par les intersections des faces de dépouille et de contre-dépouille avec des plans passant par l'axe de rotation 14 de la fraise, ont une forme arrondie convexe vers l'extérieur dont le rayon de courbure R₁ est compris entre 5 et 20mm environ, de préférence entre 10 et 15mm, et est par exemple de 12mm.

La figure 4 est une vue agrandie en coupe axiale de la fraise, la coupe passant par la face de contre-dépouille A_{β} d'une dent 22. On peut voir sur cette figure le profil arrondi 34 de cette face de contre-dépouille A_{β}, ainsi que son rayon de courbure R₁.

L'extrémité radialement interne du profil 34 est située en dessous de l'extrémité radialement externe de ce profil, c'est-à-dire que les bords périphériques interne et externe de chaque dent 22 sont décalés axialement l'un par rapport à l'autre, le bord périphérique interne de la dent étant situé en dessous du bord périphérique externe de cette dent. Les bords périphériques internes des dents définissent donc l'extrémité inférieure de la fraise et sont destinés à venir en premier au contact de la pièce à usiner lors d'une opération de fraisage.

Le profil arrondi 34 de la face de contre-dépouille A_{β} est raccordé à son extrémité radialement externe à la paroi latérale de la dent par un bord arrondi 36 dont le rayon de courbure R₂ est compris entre 0,5 et 1 mm environ, et est par exemple de 0,8mm. Le profil 34 de la face A_{β} est raccordé à son extrémité radialement interne à la cavité centrale 23 de la fraise par un bord arrondi 38 dont le rayon de courbure R₃ est également compris entre 0,5 et 1 mm environ, et est par exemple de 0,8mm. Ces bords arrondis s'étendent sur toute la dimension circonférentielle de la dent, au niveau de ses faces de dépouille A_{α} et de contre-dépouille A_{β}, le bord arrondi radialement externe 36 de le dent étant raccordé au bec 32 de cette dent.

Dans l'exemple représenté, le profil arrondi 34 s'étend dans le plan de coupe sur un angle de 20-25° environ et son centre est situé au niveau du corps 12 de la fraise. Les centres C₂ et C₃ des bords arrondis 36, 38 sont situés sur des rayons du profil 34. Le bord 36 s'étend sur un angle de 70-80° environ, et le bord 38 s'étend sur un angle de 30-40°, environ dans le plan précité.

La paroi latérale de chaque dent 22 converge légèrement vers l'intérieur d'avant en arrière (figure 2) et s'écarte d'un angle 39 compris entre 5 et 12°, et par exemple de 7°, d'un plan tangent à la paroi extérieure du corps de la fraise.

La cavité centrale 23 de la fraise a une forme générale tronconique qui s'étend le long de l'axe 14 de la fraise, la grande base du tronc de cône étant située du côté de la tête 16 et l'angle d'ouverture 40 du cône étant compris entre 90 et 150° environ, de préférence entre 110 et 130°, et est par exemple de 120°.

Le sommet de la cavité 23 est conformé en portion de sphère dont le centre C₄ est situé sur l'axe 14 de la fraise et le rayon R₄ est compris entre 2 et 8mm environ, de préférence entre 3 et 6mm, et est par exemple de 4,7mm. La cavité 23 a une hauteur ou dimension axiale comprise entre 1 et 3mm environ et un diamètre à sa base compris entre 5 et 15mm environ.

La fraise 10 peut comprendre un conduit axial 42 d'alimentation en lubrifiant de la tête de la fraise, ce conduit 42 étant relié à son extrémité supérieure à un réservoir de lubrifiant et débouchant à son extrémité inférieure dans la cavité centrale 23 de la fraise (figures 1 et 3). En variante, ce conduit 42 peut être relié à son extrémité inférieure à trois canaux débouchant chacun au niveau d'une dent 22 de la fraise.

La fraise 10 représentée dans les dessins permet d'usiner des rainures sur des matériaux durs avec une grande vitesse de coupe, une grande avance, et une faible profondeur de passe. Dans l'exemple représenté, la profondeur de passe aₚ correspond sensiblement à la dimension axiale entre les bords périphériques interne et externe des dents de la fraise (figure 4). Les plages de valeurs conseillées pour l'utilisation de cette fraise sont les suivantes :
- vitesse de coupe v_{c} comprise de préférence entre 600 et 1000 m/min,
- avance par dent f_{z} comprise de préférence entre 0,2 et 0,5mm, et
- profondeur de passe aₚ comprise entre 0,1 et 1 mm.

## Revendications

1. Fraise, en particulier à rainurer, comprenant un corps (12) en carbure s'étendant le long de l'axe (14) de rotation de la fraise et une tête (16) en céramique fixée par brasage à une extrémité du corps, cette tête comportant des dents (22) régulièrement réparties autour de l'axe de la fraise et séparées les unes des autres par des poches à copeaux (28), chaque dent comportant une arête principale de coupe (24) sensiblement radiale formée par une intersection entre une face avant de coupe (A_{γ}) et une face inférieure de dépouille (A_{α}),
**caractérisée en ce que** :
- la fraise a une forme générale tronconique dont la grande base est située du côté de la tête, la fraise ayant une conicité comprise entre 1 et 5°,
- le profil (34) de la face de dépouille, formé par l'intersection de la face de dépouille avec un plan passant par l'axe de la fraise, a une forme arrondie convexe vers l'extérieur dont le rayon de courbure (R₁) est compris entre 5 et 20mm, et
- l'angle de coupe radial (γ_{f}) entre la face de coupe de chaque dent et un plan de référence (Pᵣ) passant par l'axe de rotation de la fraise et par un point considéré de l'arête principale de coupe de la dent, est négatif et compris entre 2 et 8°, cet angle étant mesuré dans un plan de travail (P_{f}) perpendiculaire à l'axe de rotation de la fraise et passant par le point considéré de l'arête principale de coupe de la dent.

2. Fraise selon la revendication 1, **caractérisée en ce qu'**elle a une conicité de 3°environ.

3. Fraise selon la revendication 1 ou 2, **caractérisée en ce que** l'angle de coupe radial (γ_{f}) est de -5°environ.

4. Fraise selon l'une des revendications précédentes, **caractérisée en ce que** le profil (34) de la face de dépouille (A_{α}) a un rayon de courbure (R₁) de 12mm environ.

5. Fraise selon l'une des revendications précédentes, **caractérisée en ce qu'**elle comprend une arête secondaire de coupe (26) sensiblement axiale raccordée à l'arête principale de coupe par un bec (32), ce bec ayant une forme arrondie convexe dont le rayon de courbure est compris entre 0,5 et 1mm.

6. Fraise selon l'une des revendications précédentes, **caractérisée en ce que** l'angle de coupe axial (γₚ) entre la face de coupe (A_{γ}) de chaque dent (22) et le plan de référence (Pᵣ), est positif et compris entre 1 et 5°, cet angle étant mesuré dans un plan vers l'arrière (Pₚ) perpendiculaire aux plans de référence et de travail (Pᵣ, P_{f}).

7. Fraise selon l'une des revendications précédentes, **caractérisée en ce que** la face de dépouille (A_{α}) de chaque dent (22) est raccordée à une paroi latérale de la dent par un bord arrondi (36) ayant un rayon de courbure (R₂) compris entre 0,5 et 1mm.

8. Fraise selon l'une des revendications précédentes, **caractérisée en ce que** les dents (22) s'étendent autour d'une cavité annulaire centrale (23) de la tête (16), cette cavité ayant une forme générale tronconique alignée avec l'axe de la fraise et dont la base est située du côté de l'extrémité inférieure de la fraise, le sommet de la cavité étant en portion de sphère dont le rayon (R₄) est compris entre 2 et 8mm.

9. Fraise selon la revendication 8, **caractérisée en ce que** la cavité (23) est raccordée à la face de dépouille (A_{α}) de chaque dent (22) par un bord arrondi (38) ayant un rayon de courbure (R₃) compris entre 0,5 et 1mm.

10. Fraise selon l'une des revendications précédentes, **caractérisée en ce que** la face de dépouille (A_{α}) s'étend en direction circonférentielle sur une distance (33) comprise entre 0,1 et 2mm.

11. Fraise selon l'une des revendications précédentes, **caractérisée en ce que** l'angle de dépouille (α) entre la face de dépouille et un plan d'arête (Ps) tangent à un point considéré de l'arête principale de coupe et perpendiculaire au plan de référence (Pᵣ), est positif et compris entre 5 et 10°, cet angle étant mesuré dans un plan normal (Pₙ) perpendiculaire à l'arête principale de coupe, au point considéré de cette arête.

12. Fraise selon l'une des revendications précédentes, **caractérisée en ce qu'**une face de contre-dépouille (A_{β}) s'étend en arrière de la face de dépouille (A_{α}), le profil (34) de la face de contre-dépouille, formé par l'intersection de cette face avec un plan passant par l'axe de la fraise, a une forme arrondie convexe vers l'extérieur dont le rayon de courbure (R₁) est compris entre 5 et 20mm.

13. Fraise selon la revendication 12, **caractérisée en ce que** l'angle de contre-dépouille (β) entre la face de contre-dépouille (A_{β}) et un plan d'arête (Pₛ) tangent à l'arête principale de coupe, à un point considéré de cette arête, et perpendiculaire au plan de référence (Pᵣ), est positif et compris entre 10 et 20°, cet angle étant mesuré dans un plan normal (Pₙ) perpendiculaire à l'arête principale de coupe, au point considéré de l'arête.

14. Fraise selon l'une des revendications précédentes, **caractérisée en ce que** l'arête principale de coupe (24) est raccordée à la face de coupe (A_{γ}) par un chanfrein (30), ce chanfrein ayant une dimension axiale comprise entre 0,01 et 0,3mm formant avec la face de coupe (A_{γ}) un angle compris entre 10 et 30°.

15. Procédé de fraisage d'une pièce en composite ou en superalliage au moyen d'une fraise (10) selon l'une des revendications précédentes, **caractérisé en ce que** les vitesses de coupe de la fraise sont comprises entre 200 et 1500m/min, les avances par dent sont comprises entre 0,1 et 1mm, et les profondeurs de passe sont comprises entre 0,01 et 2mm.

## Claims

1. A milling cutter, in particular a slotting milling cutter, which comprises a carbide body (12) extending along the rotation axis (14) of the milling cutter and a ceramic head (16) fixed to one end of the body by brazing, this head having teeth (22) regularly distributed around the axis of the milling cutter and separated from one another by chip pockets (28), each tooth having a substantially radial main cutting edge (24) formed by an intersection between a front cutting face (A_{γ}) and a lower flank face (A_{α}), wherein:
- the milling cutter has a frustoconical general shape, the large base of which is located on the head side, the milling cutter having a conicity between 1° and 5°;
- the profile (34) of the flank face, formed by the intersection of the flank face with a plane passing through the axis of the milling cutter, has an outwardly convex rounded shape, the radius of curvature (R₁) of which is between 5 mm and 20 mm; and
- the radial cutting angle (γ_{f}) between the cutting face of each tooth and a reference plane (Pᵣ) passing through the rotation axis of the milling cutter and through a point in question on the main cutting edge of the tooth is negative and between 2° and 8°, this angle being measured in a working plane (P_{f}) perpendicular to the rotation axis of the milling cutter and passing through the point in question on the main cutting edge of the tooth.

2. The milling cutter according to claim 1, which has a conicity of about 3°.

3. The milling cutter according to claim 1 or 2, wherein the radial cutting angle (γ_{f}) is about -5°.

4. The milling cutter according to one of the preceding claims, wherein the profile (34) of the flank face (A_{α}) has a radius of curvature (R₁) of about 12 mm.

5. The milling cutter according to one of the preceding claims, which includes an approximately axial secondary cutting edge (26) joined to the main cutting edge via a nose, this nose (32) having a convex rounded shape whose radius of curvature is between 0.5 mm and 1 mm.

6. The milling cutter according to one of the preceding claims, wherein the axial cutting angle (γₚ) between the cutting face (A_{γ}) of each tooth (22) and the reference plane (Pᵣ), is positive and between 1° and 5°, this angle being measured in a rearward plane (Pₚ) perpendicular to the reference and working planes (Pᵣ, P_{f}).

7. The milling cutter according to one of the preceding claims, wherein the flank face (A_{α}) of each tooth is joined to a side wall of the tooth (22) via a rounded edge (36) having a radius of curvature (R₂) of between 0.5 mm and 1 mm.

8. The milling cutter according to one of the preceding claims, wherein the teeth (22) extend around a central annular cavity (23) of the head (16), this cavity having a frustoconical general shape aligned with the axis of the milling cutter and the base of which is located on the lower end side of the milling cutter, the top of the cavity being a portion of a sphere, the radius (R₄) of which is between 2 mm and 8 mm.

9. The milling cutter according to claim 8, wherein the cavity (23) is joined to the flank face (A_{α}) of each tooth (22) via a rounded edge (38) having a radius of curvature (R₃) of between about 0.5 mm and 1 mm.

10. The milling cutter according to one of the preceding claims, wherein the flank face (A_{α}) extends circumferentially over a distance (33) of between 0.1 mm and 2 mm.

11. The milling cutter according to one of the preceding claims, wherein the flank angle (α) between the flank face and an edge plane (Ps) tangential to a point in question on the main cutting edge and perpendicular to the reference plane (Pᵣ) is positive and between 5° and 10°, this angle being measured in a normal plane (Pₙ) perpendicular to the main cutting edge at the point in question on this edge.

12. The milling cutter according to one of the preceding claims, wherein a rake face (A_{β}) extends rearwards from the flank face (A_{α}), the profile (34) of the rake face, formed by the intersection of this face with a plane passing through the axis of the milling cutter, has an outwardly convex rounded shape whose radius of curvature (R₁) is between 5 mm and 20 mm.

13. The milling cutter according to claim 12, wherein the rake angle (β) between the rake face (A_{β}) and an edge plane (Pₛ) tangential to the main cutting edge, at a point in question on this edge, and perpendicular to the reference plane (Pᵣ) , is positive and between 10° and 20°, this angle being measured in a normal plane (Pₙ) perpendicular to the main cutting edge at the point in question on the edge.

14. The milling cutter according to one of the preceding claims, wherein the main cutting edge (24) is joined to the cutting face (A_{γ}) via a bevel (30), this bevel having an axial dimension of between 0.01 mm and 0.3 mm and making an angle of between 10 ° and 30 ° with the cutting face (A_{γ}).

15. A method for the milling cutting of a composite or superalloy part by means of a milling cutter (10) as claimed in one of the preceding claims, wherein the cutting speed of the milling cutter is between 200 and 1500 m/min, the feed per tooth is between 0.1 and 1 mm and the pass depth is between 0.01 and 2 mm.

## Patentansprüche

1. Fräser, insbesondere Nutenfräser, umfassend einen Körper (12) aus Karbid, der sich entlang der Rotationsachse (14) des Fräsers erstreckt, sowie einen Kopf (16) aus Keramik, der an einem Ende des Körpers festgelötet ist, wobei dieser Kopf Zähne (22) aufweist, die um die Achse des Fräsers gleichmäßig verteilt und durch Spanmulden (28) voneinander getrennt sind, wobei jeder Zahn eine im Wesentlichen radiale Hauptschneidkante (24) aufweist, die durch einen Schnittpunkt zwischen einer vorderen Spanfläche (A_{γ}) und einer unteren Freifläche (A_{α}) gebildet ist, **dadurch gekennzeichnet, dass**
- der Fräser eine allgemeine Kegelstumpfform aufweist, deren große Basis auf der Seite des Kopfes gelegen ist, wobei der Fräser eine Konizität im Bereich zwischen 1 und 5° aufweist,
- das Profil (34) der Freifläche, das durch Kreuzen der Freifläche mit einer durch die Achse des Fräsers verlaufenden Ebene gebildet ist, eine abgerundete, nach außen konvexe Form hat, deren Krümmungsradius (R₁) zwischen 5 und 20 mm liegt, und
- der radiale Schneidwinkel (γ_{f}) zwischen der Spanfläche eines jeden Zahns und einer durch die Rotationsachse des Fräsers und durch einen betrachteten Punkt der Hauptschneidkante des Zahns verlaufenden Bezugsebene (Pᵣ) negativ ist und zwischen 2 und 8° beträgt, wobei dieser Winkel in einer zur Rotationsachse des Fräsers senkrechten und durch den betrachteten Punkt der Hauptschneidkante des Zahns verlaufenden Arbeitsebene (P_{f}) gemessen wird.

2. Fräser nach Anspruch 1, **dadurch gekennzeichnet, dass** er eine Konizität von etwa 3° aufweist.

3. Fräser nach Anspruch 1 oder 2, **dadurch gekennzeichnet, dass** der radiale Schneidwinkel (γ_{f}) etwa -5° beträgt.

4. Fräser nach einem der vorstehenden Ansprüche, **dadurch gekennzeichnet, dass** das Profil (34) der Freifläche (A_{α}) einen Krümmungsradius (R₁) von etwa 12 mm aufweist.

5. Fräser nach einem der vorstehenden Ansprüche, **dadurch gekennzeichnet, dass** er eine im Wesentlichen axiale Nebenschneidkante (26) aufweist, die über eine Nase (32) an die Hauptschneidkante anschließt, wobei diese Nase eine abgerundete, konvexe Form aufweist, deren Krümmungsradius zwischen 0,5 und 1 mm liegt.

6. Fräser nach einem der vorstehenden Ansprüche, **dadurch gekennzeichnet, dass** axiale Schneidwinkel (γₚ) zwischen der Spanfläche (A_{γ}) eines jeden Zahns (22) und der Bezugsebene (Pᵣ) positiv ist und 1 bis 5° beträgt, wobei dieser Winkel in einer Rückebene (Pₚ) senkrecht zu der Bezugs- und der Arbeitsebene (Pᵣ, P_{f}) gemessen wird.

7. Fräser nach einem der vorstehenden Ansprüche, **dadurch gekennzeichnet, dass** die Freifläche (A_{α}) eines jeden Zahns (22) über eine abgerundete Kante (36), die einen Krümmungsradius (R₂) zwischen 0,5 und 1 mm aufweist, an eine Seitenwand des Zahns angeschlossen ist.

8. Fräser nach einem der vorstehenden Ansprüche, **dadurch gekennzeichnet, dass** die Zähne (22) um eine ringförmige, mittlere Vertiefung (23) des Kopfes (16) herum verlaufen, wobei diese Vertiefung eine allgemeine Kegelstumpfform aufweist, die mit der Achse des Fräsers ausgerichtet ist und deren Basis auf der Seite des unteren Endes des Fräsers gelegen ist, wobei der Scheitel der Vertiefung eine Kugelsegmentform aufweist, deren Radius (R₄) 2 bis 8 mm beträgt.

9. Fräser nach Anspruch 8, **dadurch gekennzeichnet, dass** die Vertiefung (23) über eine abgerundete Kante (38), die einen Krümmungsradius (R₃) zwischen 0,5 und 1 mm aufweist, an die Freifläche (A_{α}) eines jeden Zahns (22) angeschlossen ist.

10. Fräser nach einem der vorstehenden Ansprüche, **dadurch gekennzeichnet, dass** die Freifläche (A_{α}) sich in Umfangsrichtung über eine Strecke (33) zwischen 0,1 und 2 mm erstreckt.

11. Fräser nach einem der vorstehenden Ansprüche, **dadurch gekennzeichnet, dass** der Freiwinkel (α) zwischen der Freifläche und einer Schneidenebene (Ps), die einen betrachteten Punkt der Hauptschneidkante berührt und zu der Bezugsebene (Pᵣ) senkrecht verläuft, positiv ist und zwischen 5 und 10° beträgt, wobei dieser Winkel in einer Normalebene (Pₙ), die zu der Hauptschneidkante, in dem betrachteten Punkt dieser Schneide senkrecht verläuft, gemessen wird.

12. Fräser nach einem der vorstehenden Ansprüche, **dadurch gekennzeichnet, dass** eine Gegenfreifläche (A_{β}) sich hinter der Freifläche (A_{α}) erstreckt, wobei das Profil (34) der Gegenfreifläche, das durch Kreuzen dieser Fläche mit einer durch die Achse des Fräsers verlaufenden Ebene gebildet ist, eine abgerundete, nach außen konvexe Form hat, deren Krümmungsradius (R₁) zwischen 5 und 20 mm liegt.

13. Fräser nach Anspruch 12, **dadurch gekennzeichnet, dass** der Gegenfreiwinkel (β) zwischen der Gegenfreifläche (A_{β}) und einer Schneidenebene (Pₛ), die die Hauptschneidkante in einem betrachteten Punkt dieser Schneide berührt und zur Bezugsebene (Pᵣ) senkrecht verläuft, positiv ist und zwischen 10 und 20° beträgt, wobei dieser Winkel in einer Normalebene (Pₙ), die zu der Hauptschneidkante, in dem betrachteten Punkt dieser Schneide senkrecht verläuft, gemessen wird.

14. Fräser nach einem der vorstehenden Ansprüche, **dadurch gekennzeichnet, dass** die Hauptschneidkante (24) über eine Fase (30) an die Spanfläche (A_{γ}) angeschlossen ist, wobei diese Fase eine axiale Abmessung zwischen 0,01 und 0,3 mm aufweist und mit der Spanfläche (A_{γ}) einen Winkel zwischen 10 und 30° bildet.

15. Verfahren zum Fräsen eines Teils aus Verbundwerkstoff oder aus einer Superlegierung mittels eines Fräsers (10) nach einem der vorstehenden Ansprüche, **dadurch gekennzeichnet, dass** die Schnittgeschwindigkeiten des Fräsers zwischen 200 und 1500 m/Min. liegen, wobei die Vorschübe pro Zahn im Bereich zwischen 0,1 und 1 mm liegen und die Schnitttiefen 0,01 bis 2 mm betragen.
